Europäisches Patentamt

European Patent Office

Office européen des brevets

(19)

(11) Veröffentlichungsnummer : **0 084 288**
**B1**

(12) EUROPÄISCHE PATENTSCHRIFT

(45) Veröffentlichungstag der Patentschrift :
05.03.86

(51) Int. Cl.⁴ : **C 21 B 13/00**

(21) Anmeldenummer : **82630111.1**

(22) Anmeldetag : **06.12.82**

(54) Verfahren und Einrichtung zum direkten Herstellen von flüssigem Eisen.

(30) Priorität : **09.12.81 LU 83826**

(43) Veröffentlichungstag der Anmeldung :
**27.07.83 Patentblatt 83/30**

(45) Bekanntmachung des Hinweises auf die Patenterteilung : **05.03.86 Patentblatt 86/10**

(84) Benannte Vertragsstaaten :
**AT BE DE FR GB IT NL SE**

(56) Entgegenhaltungen :
**EP-A- 0 018 935**
**EP-A- 0 028 998**
**EP-A- 0 036 382**
**EP-A- 0 043 338**
**DE-A- 2 550 761**
**DE-C-   846 553**
**US-A- 3 462 263**
**US-A- 3 711 275**

(73) Patentinhaber : **ARBED S.A.**
**Avenue de la Liberté 19**
**L-2930 Luxembourg (LU)**

(72) Erfinder : **Weiner, Antoine**
**13 rue Emile Mayrisch**
**L-2141 Luxembourg (LU)**

(74) Vertreter : **Neyen, René**
**Administration Centrale de l'Arbed Case postale 1802**
**L-2930 Luxembourg (LU)**

## Beschreibung

Die vorliegende Erfindung betrifft ein Verfahren und eine Einrichtung zu direkten Herstellen von flüssigem Eisen, ausgehend von oxydischen Eisenverbindungen.

Es hat in der Vergangenheit nicht an Versuchen gefehlt, flüssiges Eisen möglichst im Direktverfahren aus Erzen herzustellen.

So sind Verfahren bekannt, gemäss welchen die Rohstoffe zunächst mit Hilfe von geeigneten Gasen in Eisenschwamm überführt werden und dieser dann in einem metallurgischen Gefäss eingeschmolzen wird, wobei im Schmelzgefäss durch Reaktion von sauerstoffhaltigen Gasen mit kohlenstoffhaltigen Substanzen, die vornehmlich unter die Badoberfläche eingeblasen werden, Wärmeenergie, sowie Kohlenmonoxyd gebildet werden. Die Wärme wird teilweise zum Schmelzen des Eisenschwammes und das Abgase zur Direktreduktion von Erzen eingesetzt. Allerdings muss vorerst das gesamte Abgas in einem separaten Reaktor mit Kohlenstaub und mit Wasserdampf behandelt werden.

Nach weiteren bekannten Verfahren wird in einem mit einer zusätzlichen Heizung versehenen, kombinierten Schmelz- und Gaserzeugungsreaktor durch Umsetzten eines Brennstoffes mit Sauerstoff ein reduzierendes Gas hergestellt, das in einem anschliessenden Reduktionsraum im Gegenstrom zu einer Erzbeschickung geleitet wird, während das am Ende der Reduktionsstufe anfallende vorreduzierte Erz in den beheizten Schmelz- und Gaserzeugungsraum befördert und dort geschmolzen und anschliessend gefrischt wird.

Im Rahmen eines weiteren Verfahrens, das auf die direkte Herstellung von Roheisen ausgerichtet ist, sind zwei gesonderte Aufgabe- bzw. Reaktionszonen im Schmelz- und Gaserzeugungsreaktor vorgesehen. In einer ersten Zone wird einer Metallschmelze zur Aufrechterhaltung eines vorzugsweise über 2 % liegenden Kohlenstoffgehaltes ein Kohlenstoffträger direkt zugeführt. In der zweiten, angrenzenden Zone wird ein Teil des an die Schmelze gebundenen Kohlenstoffs unter Freisetzung von Wärme und reduzierenden Gasen mittels Sauerstoff verbrannt. Der durch eine Tauchlanze zugeführte Kohlenstoff wird also hier auf dem Umweg über eine zwischenzeitliche Aufkohlung des Eisenbades im wesentlichen zur Vergrösserung der Einschmelzkapazität des Bades und zur Bildung von Reduktionsgasen ausgenutzt.

Bei der Anwendung der genannten Verfahren ist man demnach in der Hauptsache auf die Herstellung von Gasen angewiesen, die eine zum Reduzieren oder zumindest Vorreduzieren von Erzen notwendige Zusammensetzung aufweisen. Um stark reduzierende Gase im Rahmen eines kombinierten Reduktions-Einschmelzprozesses herzustellen, müssen jedoch teure und komplizierte mess- und regeltechnische Massnahmen und Vorkehrungen getroffen werden, den Prozess in der gewünschten Weise zum Ablaufen zu bringen, falls man es nicht vorzieht, die entstandenen Abgase getrennt zu behandeln um ihnen eine ausreichendes Reduktionspotential zu vermitteln.

So hat die Anmelderin in ihrem luxemburgischen Patent LU 82.227 ein Verfahren vorgeschlagen, das eine Direktherstellung von flüssigem Roheisen in einem einzigen Gefäss gestattet, wobei die genannten Schwierigkeiten vermieden werden.

Dieses Verfahren sieht vor, ein Eisenbad durch Einblasen eines Kohlenstoffträgers mittels eines neutralen oder reduzierenden Trägergases mit Kohlenstoff zu sättigen, wobei man über der Badoberfläche einen Schüttkegel aus Eisenerz bildet und auf die Randzonen des Bades Sauerstoff bläst, während dessen man das Bad von unten durch zumindest einen im Gefässboden angeordneten Blasstein mit einem neutralen Gas durchspült.

Letzteres bewirkt, dass die beim Aufblasen von Sauerstoff auf das mit Kohlenstoff gesättigte Eisenbad entstehenden Gase hinsichtlich ihrer Zusammensetzung wirksam gesteuert werden können und zwar kann man, falls beabsichtigt wird die Abgase zum Vorreduzieren von Erz zu verwenden, ein praktisch zu 100 % aus CO bestehendes Abgas mit hohem Reduktionspotential durch gezielte Sauerstoffzufuhr unter verminderter Durchspülung herstellen. In diesem Fall wird man eine harte Sauerstoffblasweise bevorzugen und die Durchspülung des Bades mit Inertgas auf 0-0.1 Nm3/t. Std beschränken. Andererseits kann ein intensives Durchspülen des Bades mit Inertgas eine Nachverbrennung des entstehenden Kohlenmonoxyds an der Badoberfläche begünstigen, die unter starker Wärmeentwicklung vonstatten geht. Die Mengen an Spülgas liegen dann vorzugsweise zwischen 0,1-0,3 Nm3/t. Std. Die an der Badoberfläche auftretende zusätzliche Wärmeentwicklung kann man nutzen um das dort aufgebrachte Eisenerz zu schmelzen.

Hierbei besteht selbstverständlich die Gefahr, dass ein Teil des Erzes in die Schlacken integriert wird, ohne dass es zu einer Reduktion kommt. Demzufolge könnte man vorsehen, das Erz sowie den Kohlenstoff durch Tauchlanzen in die Schmelze einzutragen. Tauchlanzen sind jedoch verschleissträchtige, teure und umständlich zu handhabende Hilfsmittel, die obendrein viel Raum beanspruchen.

Weiter könnte man die Verwendung von Bodendüsen vorsehen durch welche man sowohl Erze als auch Kohlenstoff in die Schmelze eintragen würde.

Nun sind Bodendüsen Aggregate, die ebenso wie Tauchlanzen hohem Verschleiss ausgesetzt sind und die im Hinblick auf ihre Haltbarkeit, welche zumindest einer Ofenreise entsprechen soll, aus entsprechend teurem Material gefertigt werden müssen.

Darüber hinaus leuchtet es ein, dass Bodendüsen kontinuierlich mit Gas beliefert werden müssen, um den Eintritt flüssigen Metalls zu verhindern. Dies führt zu erheblichem Mehrverbrauch an zumeist nicht billigen Gasen, wobei es erwünscht sein kann, im Verlauf des Prozesses nur während bestimmter, zum Teil recht kurzer Perioden Feststoffe durch die Düsen zu führen und letztere somit nur diskontinuierlich zu betreiben.

Das Ziel der Erfindung bestand somit darin ein Verfahren zum Herstellen von flüssigem Eisen vorzuschlagen, das einerseits eine Stoffzufuhr einschliesst, die einen Langzeitkontakt zwischen den Stoffen erlaubt und das andererseits eine hohe Flexibilität aufweist, insbesondere was die Möglichkeit eines schnellen Wechsels von gasförmigem sowie festem Material bzw. von Gemischen gestattet. Darüber hinaus soll das neue Verfahren keine teuren und grossräumigen Vorrichtungen benötigen und den unnötigen Verbrauch an Gasen sowie an Feststoffen vermeiden.

Dieses Ziel wird erreicht durch das Verfahren nach der Erfindung, das vorsieht, eine in einem metallurgischen Gefäss befindliche Eisenschmelze, die einen Kohlenstoffgehalt oberhalb 1 % aufweist und die mit einer Schlackenschicht bedeckt ist, durch Sauerstoffaufblasen zu entkohlen, wobei die Schlacke oxydiert wird und unter Schaumbildung im Gefäss steigt und ein Ueberschäumen der Schlacke zu verhindern, indem man die Schichtdicke der Schlacke kontinuierlich misst und bei Ueberschreiten eines empirisch festgelegten Grenzwertes durch im Gefässboden angeordnete Beschickungsaggregate einen Inertgasstrom in die Schmelze leitet, der der Schaumbildung entgegenwirkt. Das Verfahren sieht ferner vor, dass man durch in den Gefässwänden oberhalb des Metallpegels angeordnete Beschickungsaggregate mit Hilfe eines inerten Trägergases gepulvertes Erz und Kohlenstoff in den Schlackenschaum einführt, wobei man das Aufblasen von Sauerstoff und das Einblasen von Inertgas so regelt, dass der Schlackenpegel seine festgelegte Grenzhöhe im wesentlichen beibehält.

Mithin ist das Medium, in welchem sich die metallurgischen Vorgänge abspielen, nicht ausschliesslich das Metallbad, wie dies dem Stand der Technik entspricht, sondern erfindungsgemäss in der Hauptsache die Schlacke und zwar eine schäumige und nicht etwa flüssige Schlacke.

Es ist der Anmelderin gelungen ein Verfahren auszuarbeiten das es erlaubt, das Schäumen der Schlacke in einem Konverter während des Blasens zu steuern und zwar ist es möglich den Schlackenpegel über eine Schichtdickenmessung, wie die Anmelderin sie in ihrem Patent LU 71.261 beschrieben hat, kontinuierlich zu bestimmen und die Schaumbildung durch mehr oder weniger intensives Bodenblasen von Inertgas zu verringern bzw. zu erhöhen. Letztere Methoden hat die Anmelderin in ihren Patenten LU 81.207 und LU 81.859 offenbart.

Die Aufnahme von Kohlenstoff durch flüssiges Eisen ist eine endotherme Reaktion. Aus diesem Grunde wird der Anteil an im Eisen gelösten Kohlenstoff pro Menge eingetragenen Kohlenstoffs in umso stärkerem Masse sinken, als man beim Eintragen auf die Zuhilfenahme grössere Mengen an kühlendem Trägergas angewiesen ist. Will man demnach die Eisenschmelze mit Kohlenstoff sättigen bzw. übersättigen, so muss man Kohlenstoffkonzentrationen anstreben, die oberhalb 3 % C liegen und dies in Gefässen die rund 200 Tonnen Eisen enthalten können. Das Erreichen dieser Konzentrationen bedingt erfahrungsgemäss das Eintragen hoher Ueberschüsse an Kohlenstoff mit entsprechend hohem Aufwand an kühlendem Trägergas. Selbstverständlich ist auch Erz eine kühlende Substanz und auch die Reduktion des Erzes zu Metall erfordert Energie.

Dank dem erfindungsgemässen Verfahren, das sich innerhalb einer schäumigen Schlacke abspielt, verringert man diese Schwierigkeiten. Ausserdem benötigt man verhältnismässig geringe Mengen an Trägergas.

Es lassen sich mittels konventionneller Einrichtungen sowohl die Zusammensetzung der Abgase als auch die Badtemperatur kontinuierlich oder diskontinuierlich bestimmen. Auf sinkende Badtemperaturen wird man durch erhöhte Mengen an aufgeblasenem Sauerstoff reagieren, wobei man einen harten Sauerstoffstrahl ($O_a$) auf die Badoberfläche richten wird ; moderne Blaslanzen gestatten es, den Strahl je nach Bedarf zu modulieren. Analog wird man aus einem erniedrigten CO- und einem gleichzeitig erhöhten $CO_2$-Gehalt im Abgas auf eine ungenügende Konzentration an Kohlenstoff im Bad schliessen und die Feststoffzuführung anpassen, indem man den C-Anteil erhöht.

Die ideale Feststoffzusammensetzung begreift rund 70 % $Fe_2O_3$ und 30 % C, wobei die feingemahlenen Stoffe vorzugsweise getrennt gelagert und erst bei der eigentlichen Zuführung ins Bad, vor dem Durchgang durch das Beschickungsaggregat vermischt werden. Erfindungsgemäss wird man in der Wand des Konverters mehrere Beschickungsaggregate (E2) anordnen, die man im Verlauf des Prozesses je nach Bedarf einzeln bis insgesamt betreibt und mit Erz, Kohlenstoff bzw. einem Gemisch aus beiden Komponenten beschickt.

Die Erfindung bietet einen entscheidenden Vorteil und zwar steht feinkörniges Eisenerz in grossen Mengen und zu relativ niedrigen Preisen zur Verfügung. Der Grund hierfür ist die Tatsache, dass der Billigtransport von Erzen mittels Rohrleitungen voraussetzt, dass die Erze in feingemahlenem Zustand vorliegen, wobei die mittlere Korngrösse bei rund 50 um liegt. Dies wiederum hat zur Folge, dass die auf billigem Wege transportierten Erze gemäss dem Stand der Technik erneut in eine Form überführt werden müssen, die ihre metallurgische Weiterverarbeitung gestattet, was bedeutet, dass die Erze vor ihrer Weiterverarbeitung pelletiert werden müssen. Das Pelletieren ist, da man die Pellets brennen muss, eine relativ kostspielige Angelegenheit, so dass die durch den Billigtransport erzielten Gewinne infolge der zwangsläufig notwendigen Ueberführung der Erze in Pellets, wieder verloren gehen. Diese Nachteile werden erfindungsgemäss nicht nur vermieden, sondern in einen eindeutigen Vorteil verwandelt.

Die zur Durchführung des erfindungsgemässen Verfahrens benötigte Einrichtung begreift im wesentlichen einen Konverter zum Frischen von Roheisen, der mit einer Sauerstoff-Aufblaslanze (L) ausgerüstet ist. Im Boden des Konverters sind mehrere Beschickungsaggregate (E1) zum Einführen des Inertgases und in der Wand mehrere Beschickungsaggregate (E2) zum Einführen der Feststoffe angeordnet. Jedes Beschickungsaggregat (E1, E2) begreift einen feuerfesten, gasdurchlässigen Baukörper, der aus mindestens zwei, an Längsflächen aneinanderliegenden, aus feuerfestem, ungebranntem, z. B. mit einem Kohlenstoffträger gebundenem oder chemisch gebundenem Material bestehenden Segmenten aufgebaut ist. Diese Segmente sind an mindestens einer Längsfläche mit einer verschleissfesten Auflage versehen und werden durch ein gemeinsames Metallgehäuse zusammengefasst, das an den Längsflächen der Segmente dicht, gegebenenfalls unter Zwischenschaltung einer Mörtelschicht, anliegt, wobei an einer Stirnfläche des Baukörpers mindestens ein Anschluss und ein Verteilungsraum für die Materialzufuhr angeordnet sind und der Anschluss mit zumindest einer Gas- und mit zumindest einer Feststoffzuführeinrichtung verbunden ist, von denen jede eine Dosiervorrichtung begreift.

Die Dosiervorrichtung für Feststoffe ist nützlicherweise eine an sich bekannte Zellenrad-Durchblasschleuse, wie die Anmelderin sie z. B. in ihrem luxemburgischen Patent LU 80.692 beschrieben hat.

Somit können erfindungsgemäss gasdurchlässige Baukörper, die dem Stand der Technik entsprechend zum Zuführen von Gasen in flüssige Metalle vorgesehen werden und wie sie die Anmelderin in ihren luxemburgischen Patenten LU 82.552, 82.553, 82.554 und 82.597 beschrieben hat, auch zum Einführen von Feststoffen herangezogen werden, was durch ein Koppeln jedes Baukörpers (E2) mit jeweils einer ebenfalls bekannten, jedoch in anderen Zusammenhängen verwendeten Feststoffzuführeinrichtung ermöglicht wird.

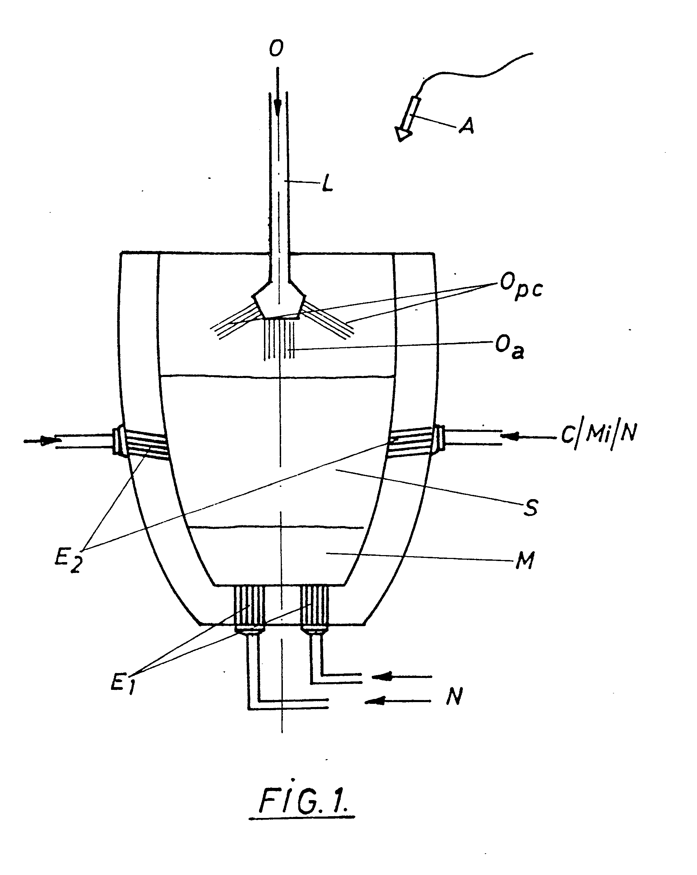

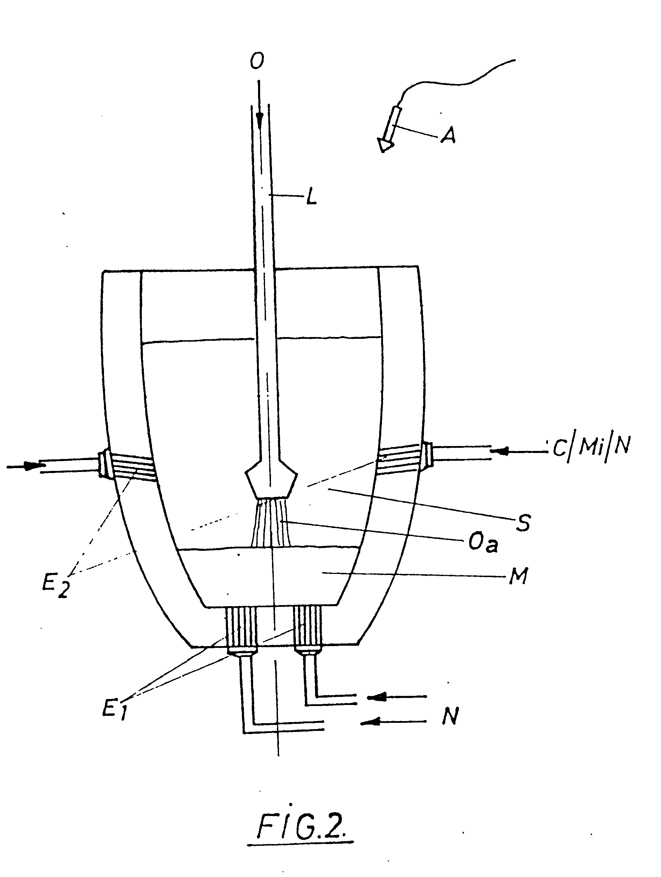

Weitere Merkmale gehen aus der Beschreibung der Zeichnung hervor, in der die Fig. 1 und 2 Schnitte durch eine schematische Darstellung einer möglichen Ausführungsform der Einrichtung nach der Erfindung zeigen.

Man erkennt den Konverter, in dem sich ein Metallbad (M) und die darüberliegende Schlackenschicht (S) befindet und der mit einer Blaslanze (L) ausgerüstet ist. Diese Lanze ist vorzugsweise eine Zweikreis-Blaseinrichtung, wie die Anmelderin sie in ihrem Patent LU 82.846 beschrieben hat und die es ermöglicht, harte vertikale Sauerstoffstrahle ($O_a$) sowie weiche geneigte Sauerstoffstrahle ($O_{pc}$) zu liefern, wobei

erstere zum Entkohlen des Metalls und letztere zum Bedecken der Badoberfläche mit einer Sauerstoffschicht dienen, was eine eventuelle Nachverbrennung des beim Prozess entstehenden Kohlenmonoxyds bewirken kann. Diese Nachverbrennung kann in nicht unerheblichem Mass zum Liefern der benötigten thermischen Energie beitragen, die in der Hauptsache durch die beim Entkohlen des Bades freiwerdende Wärme gedeckt wird.

Im Konverterboden und in der Wand befinden sich die Beschickungsaggregate (E1 bzw. E2). Durch die Baukörper (E2) werden Kohlenstoff und Erz mittels eines Trägergases, bspw. Stickstoff (C/Mi/N) in den Schlackenschaum eingetragen. Wie leicht einzusehen, sind die Baukörper (E1) einer stärkeren Beanspruchung ausgesetzt als die Baukörper (E2), da erstere mit flüssigem Metall in Berührung stehen, die Baukörper (E2) hingegen von schaumförmigem oxidischen Material berührt werden, dessen Gegendruck relativ gering ist, wodurch eine wesentlich geringere Tendenz des Eindringens von Material in den Baukörper existiert, als dies für die Bodenblas-Baukörper (E1) zutrifft. Aus diesem Grunde ist es auch nur in einem sehr geringen Mass notwendig bzw. ganz überflüssig, die Stirnflächen der Baukörper (E2) durch ein Dauerspülen mit Inertgas vor eindringendem Material zu bewahren. Hierdurch werden Kühleffekte vermieden und Inertgas eingespart. Alternativ besteht, eben aus den angeführten Ursachen die Möglichkeit, die Durchgänge der Baukörper (E2) grösser zu gestalten als dies im Fall von Baukörpern möglich ist, die sich im Boden des Konverters befinden. Diese Vergrösserung ist ohne weiteres zu erzielen, indem man zwischen die einzelnen Segmente des Baukörpers profilierte Blecheinlagen einfügt, wobei das Ausmass der Profilierung natürlich nicht derart gross gewählt werden darf, dass das Risiko eines Eindringens von Schaum in den Baukörper auftritt, sobald dieser nicht oder nur schwach betrieben wird.

Schliesslich erkennt man ein akustisches Schallmessgerät (A), mit dessen Hilfe die kontinuierliche Bestimmung der Schlackenschichtdicke erfolgt, während die Zellenrad-Durchblasschleusen sowie das Probennahme-Gerät für die kontinuierliche Abgasanalyse nicht dargestellt sind.

Wie die Fig. 2 zeigt, wird im Hinblick auf eine starke Schaumbildung die Lanze nahe an den Metallpegel gebracht und es wird ein harter, vertikaler Sauerstoffstrahl ($O_a$) aufgeblasen. Der Lanzenkopf taucht dann in den Schaum (S), in welchem sich die Reduktion des Erzes durch miteingeblasenen Kohlenstoff, sowie durch das beim Aufblasen gebildete CO vollzieht.

**Patentansprüche**

1. Verfahren zum direkten Herstellen von flüssigem Eisen, ausgehend von Eisenoxyden, das vorsieht, dass man eine in einem metallurgischen Gefäss befindliche Eisenschmelze, die eine Kohlenstoffgehalt oberhalb 1 % aufweist und die mit einer Schlackenschicht bedeckt ist, durch Sauerstoffaufblasen entkohlt, wobei Wärme entsteht und wobei die Schlacke oxydiert wird und unter Schaumbildung steigt, dadurch gekennzeichnet, dass man die Schichtdicke der Schlacke kontinuierlich misst und bei Ueberschreiten eines empirisch festgelegten Grenzwertes durch im Gefässboden angeordnete Beschickungsaggregate einen Inertgasstrom in die Schmelze leitet, der der Schaumbildung entgegenwirkt, dass man durch in den Gefässwänden oberhalb des Metallpegels angeordnete Beschickungsaggregate mit Hilfe eines Trägergases gepulvertes Erz und Kohlenstoff in den Schlackenschaum einführt, wobei man das Aufblasen von Sauerstoff und das Einblasen von Inertgas so regelt, dass der Schlackenpegel seine festgelegte Grenzhöhe im wesentlichen beibehält.

2. Verfahren nach dem Anspruch 1, dadurch gekennzeichnet, dass man die Zusammensetzung der beim Prozess entstehenden Abgase kontinuierlich bestimmt und die Badtemperatur zumindest diskontinuierlich misst und dass man auf sinkende Temperaturen mit einem intensiveren und härteren Sauerstoffaufblasen ($O_a$) reagiert, während man bei sinkenden CO- und bei steigenden $CO_2$-Gehalt im Abgas den Anteil an zugeführtem Kohlenstoff erhöht.

3. Verfahren nach dem Anspruch 1, dadurch gekennzeichnet, dass man die vorwiegend aus Kohlenmonoxyd bestehenden Prozessabgase in an sich bekannter Weise unmittelbar über der Badoberfläche mittels weich aufgeblasenem Sauerstoff ($O_{pc}$) verbrennt.

4. Einrichtung zum Durchführen des Verfahrens nach den Ansprüchen 1-3, bei dem ein metallurgisches Gefäss zum Frischen von Roheisen mit einer Sauerstoff-Aufblaslanze (L) ausgerüstet ist und im Gefässboden mehrere Beschickungsaggregate (E1) zum Einleiten von Inertgas in die Schmelze (M) und in der Gefässwand mehrere Beschickungsaggregate (E2) zum Eintragen von Erz und/oder Kohlenstoff mit Hilfe von Trägergas (C/Mi/N) in die Schlacke (S) angeordnet sind, wobei sich die Baukörper (E2) oberhalb des Metallpegels befinden.

5. Einrichtung nach dem Anspruch 4, dadurch gekennzeichnet, dass die Baukörper (E1) und (E2) einen identischen Aufbau aufweisen, indem jeder Baukörper in an sich bekannter Weise aus mindestens zwei, an den Längsflächen aneinanderliegenden, aus feuerfestem, ungebranntem, z. B. mit einem Kohlenstoffträger gebundenem oder chemisch gebundenem Material bestehenden Segmenten aufgebaut ist, die an mindestens einer Längsfläche mit einer verschleissfesten Auflage versehen sind, dass die Segmente durch ein gemeinsames Metallgehäuse zusammengefasst sind, das an Längsflächen der Segmente dicht, gegebenenfalls unter Zwischenschaltung einer Mörtelschicht, anliegt, und dass an einer Stirnfläche des Baukörpers mindestens ein Anschluss und ein Verteilerraum für die Materialzufuhr angeordnet sind, wobei der Anschluss mit zumindest einer Gas- und ggf. mit zumindest einer Feststoffzufuhreinrichtung verbunden ist und letztere eine Dosiervorrichtung begreift.

6. Einrichtung nach dem Anspruch 5, dadurch gekennzeichnet, dass die Dosiervorrichtung eine an sich bekannte Zellenrad-Durchblasschleuse ist.

7. Einrichtung nach den Ansprüchen 4-6, dadurch gekennzeichnet, dass die Baukörper (E2) gegenüber den Baukörper (E1) vergrösserte Durchgänge aufweisen, indem zwischen den einzelnen Segmenten profilierte Blecheinlagen angeordnet sind.

8. Einrichtung nach den Ansprüchen 4-7, dadurch gekennzeichnet, dass sie ein Gerät zum kontinuierlichen Messen der Schlackenschichtdicke, sowie Geräte zum kontinuierlichen oder diskontinuierlichen Bestimment der Badtemperatur und der Zusammensetzung der Abgase aufweist.

## Claims

1. A process for direct production of liquid iron from iron oxides, which comprises decarburizing an iron melt with a carbon content above 1 % and covered by a slag layer, within a metallurgical vessel, through oxygen top-blowing, which generates heat and causes the slag to foam and rise, characterized in that one continuously determines the slag layer thickness and injects a stream of inert gas in the melt through permeable elements lodged in the vessel bottom, in case the slag raises above an empirically predetermined level, thus counteracting the foaming, that one injects with the help of a carrier gas powdered ore and carbon through permeable elements lodged in the vessel carcass above the metal level, and that one regulates the top-blowing of oxygen and the injecting of inert gas so as to substantially maintain the slag level in its predetermined position.

2. A process according to claim 1, characterized in that one continuously determines the composition of the converter gas generated in the process and that one determines at least discontinuously bath temperature and that one reacts to temperature drops by providing a more intensive and harder oxygen blow ($O_a$), while one increases the rate of injected carbon in the case of a decrease in CO- and an increase in $CO_2$-content in the converter gas.

3. A process according to claim 1, characterized in that one burns the converter gas which consists mainly in CO, in a manner known in se, by providing a soft blow of oxygen above the bath surface.

4. An installation for performing the process according to claims 1-3, where a metallurgical vessel for refining hot metal has a top-blowing lance (L) and where the vessel bottom has several permeable elements (E1) for injecting inert gas into the melt (M) and where the vessel walls have

several permeable elements (E2) for injecting powdered ore and carbon into the slag (S) with the help of a carrier gas (C/Mi/N), and where the elements (E2) are positioned above the metal level.

5. An installation according to claim 4, characterized in that the elements (E1) and (E2) show identical features, in that each element comprises in a manner known in se at least two segments abutting by their longitudinal faces and consisting in a refractory unburnt material that comprises a carbon-base or chemical binder, where at least one of the longitudinal faces has a wear-resistant layer, said segments being contained in a metal casing which tightly abuts, optionally over a concrete layer, against the segments, and that there is provided at the cold side of the elements at least one connection and one distribution chamber for materials to be fed, where said connection is with a gas source and possibly also with a solid materials feeder that comprises a metering device.

6. An installation according to claim 5, characterized in that the metering device is a cellular feeder known in se.

7. An installation according to claim 4-6, characterized in that the elements (E2) have larger passages that the elements (E1), in that there are profiled metal sheets positioned between the segments.

8. An installation according to claims 4-7, characterized in that it comprises means for continuously determining slag layer thickness and means for continuously or discontinuously determining the composition of the converter gases and bath temperature.

## Revendications

1. Procédé pour la fabrication directe de fonte liquide à partir d'oxydes de fer, qui prévoit que l'on décarbure dans un récipient métallurgique une fonte présentant une teneur en carbone supérieure à 1 % et recouverte d'une couche de laitier, par soufflage d'oxygène par le haut, ce qui crée de la chaleur et oxyde le laitier qui monte dans le récipient en moussant, caractérisé en ce que l'on mesure en continu l'épaisseur de la couche de laitier et qu'en cas de dépassement d'une hauteur-limite déterminée de manière empirique, on introduit par des éléments perméables logés dans le fond du récipient un gaz inerte qui agit à l'encontre du moussage, que l'on introduit dans la mousse du minerai et du carbone pulvérulents, par des éléments perméables logés dans les parois du récipient en dessus du niveau du bain de métal, tout en réglant le soufflage de l'oxygène et le barbotage au gaz inerte de manière à ce que le niveau du laitier reste sensiblement à sa hauteur-limite.

2. Procédé suivant la revendication 1, caractérisé en ce que l'on détermine en continu la composition des gaz formés au cours du processus et du moins en discontinu la température du bain et que l'on réagisse contre des diminutions de la température en intensifiant et en durcissant le jet d'oxygène ($O_a$), tandis que l'on augmente la part en carbone introduit, dans le cas d'une baisse en CO et d'une hausse en $CO_2$ dans le gaz de convertisseur.

3. Procédé suivant la revendication 1, caractérisé en ce que l'on brûle les gaz de convertisseur qui consistent notamment en CO, de manière connue en soi, à l'aide d'un jet mou d'oxygène ($O_{pc}$) soufflé par le haut.

4. Installation pour la mise en œuvre du procédé suivant les revendications 1-3, dans laquelle un récipient métallurgique pour l'affinage de la fonte est doté d'une lance de soufflage d'oxygène par le haut (L), où plusieurs éléments perméables (E1) pour l'introduction de gaz inerte dans le bain (M) sont logés dans le fond du récipient et où plusieurs éléments perméables (E2) pour introduire du minerai et/ou du carbone à l'aide de gaz porteur (C/Mi/N) dans le laitier (S) sont logés dans la paroi du récipient, les éléments (E2) étant disposés par-dessus du niveau du bain de métal.

5. Installation suivant la revendication 4, caractérisée en ce que les éléments (E1) et (E2) présentent un type de construction identique, chaque élément comportant de manière connue en soi au moins deux segments ayant les faces longitudinales juxtaposées et consistant en un matériau réfractaire, non cuit et contenant un liant à base de carbone ou chimique, lesquels segments sont dotés sur au moins une face longitudinale d'un revêtement anti-usure et entourés par un caisson en métal qui peut comporter un revêtement interne en béton le long desdites faces longitudinales, tandis qu'il est prévu d'un côté frontal du caisson au moins un conduit d'arrivée de gaz/matières, le conduit d'arrivée étant relié à au moins une source de gaz et éventuellement au moins une source de matières solides, cette dernière comportant un doseur.

6. Installation suivant la revendication 5, caractérisée en ce que le doseur est un doseur alvéolaire connu en soi.

7. Installation suivant les revendications 4-6, caractérisée en ce que les éléments (E2) présentent des passages plus prononcés que les passages des éléments (E1), ce qui est réalisé en prévoyant des intercalaires sous forme de feuillards profilés disposés entre les segments.

8. Installation suivant les revendications 4-7, caractérisée en ce qu'elle comprend des moyens de mesure en continu de l'épaisseur de la couche de laitier, ainsi que des moyens pour la mesure en continu ou en discontinu de la température du bain resp. la composition des gaz de convertisseur.

FIG.1.

FIG.2.